# EUROPEAN PATENT APPLICATION

(11) **EP 4 576 878 A1**
(43) Date of publication of application: **25.06.2025**
(21) Application number: 22955240.1
(22) Date of filing: 15.08.2022
(51) Int. Cl.: H04W 48/08

(54) **REGISTRATION METHOD AND APPARATUS, AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Stöckeler, Ferdinand
(86) International application number: PCT/CN2022/112609
(87) International publication number: WO 2024/036458

(57) **Abstract**

The present application relates to a registration method and apparatus, and a storage medium. The registration method comprises: sending, to a trusted non-3GPP access network (TNAN), a first identifier of a terminal, a registration type, and an identifier of a non-public network with which the terminal needs to register. In the present application, a terminal sends, to a TNAN, a first identifier of the terminal, a registration type, and an identifier of a non-public network with which the terminal needs to register, such that the terminal registers with the non-public network by means of an access network other than a 3GPP access network.

## Description

### TECHNICAL FIELD

The present disclosure relates to the field of communication technology, specifically to a registration method and a registration apparatus, and a storage medium.

### BACKGROUND

Currently terminals access non-public networks generally via 3GPP (3rd generation partnership project) access networks, for example, via base stations. However, in some cases, for certain reasons, it is required to access by the terminals via access networks other than the base stations.

### SUMMARY

In view of this, embodiments of the present disclosure provide a registration method and a registration apparatus, and a storage medium to solve technical problems in related arts.

According to a first aspect of embodiments of the disclosure, a registration method is provided. The method is performed by a terminal. The method includes: sending a first identifier of the terminal, a registration type and an identifier of a non-public network to be registered to a trusted non-3rd generation partnership project access network (TNAN).

According to a second aspect of embodiments of the disclosure, a registration method is provided. The method is performed by a trusted non-3rd generation partnership project access network (TNAN). The method includes: receiving a first identifier of a terminal, a registration type and an identifier of a non-public network to be registered sent by the terminal; and sending a registration request to an access and mobility management function (AMF), in which, the registration request includes the first identifier, the registration type, and the identifier of the non-public network to be registered.

According to a third aspect of embodiments of the disclosure, a registration method is provided. The method is performed by an access and mobility management function (AMF). The method includes: receiving a registration request sent by a trusted non-3rd generation partnership project access network (TNAN), in which, the registration request includes a first identifier of a terminal, a registration type, and an identifier of a non-public network to which the terminal is to be registered.

According to a fourth aspect of embodiments of the disclosure, a registration apparatus is provided. The apparatus includes: a sending module, configured to send a first identifier of a terminal, a registration type and an identifier of a non-public network to be registered to a trusted non-3rd generation partnership project access network (TNAN).

According to a fifth aspect of embodiments of the disclosure, registration apparatus is provided. The apparatus includes: a receiving module, configured to receive a first identifier of a terminal, a registration type and an identifier of a non-public network to be registered sent by the terminal; and a sending module, configured to send aa registration request to an access and mobility management function (AMF), in which, the registration request includes the first identifier, the registration type, and the identifier of the non-public network to be registered.

According to a sixth aspect of embodiments of the disclosure, a registration apparatus is provided. The apparatus includes: a receiving module, configured to receive a registration request sent by a trusted non-3rd generation partnership project access network (TNAN), in which, the registration request includes a first identifier of a terminal, a registration type, and an identifier of a non-public network to which the terminal is to be registered.

According to a seventh aspect of embodiments of the disclosure, a communication device is provided. The communication device includes: a processor, a memory for storing a computer program. When the computer program is executed by the processor, the registration method performed by the terminal is implemented.

According to an eighth aspect of embodiments of the disclosure, a communication device is provided. The communication device includes: a processor, a memory for storing a computer program. When the computer program is executed by the processor, the registration method performed by the TNAN is implemented.

According to a ninth aspect of embodiments of the disclosure, a communication device is provided. The communication device includes: a processor, a memory for storing a computer program. When the computer program is executed by the processor, the registration method performed by the AMF is implemented.

According to a tenth aspect of embodiments of the disclosure, a computer-readable storage medium for storing a computer program is provided. When the computer program is executed by a processor, the registration method performed by the terminal is implemented.

According to an eleventh aspect of embodiments of the disclosure, a computer-readable storage medium for storing a computer program is provided. When the computer program is executed by a processor, the registration method performed by the TNAN is implemented.

According to a twelfth aspect of embodiments of the disclosure, a computer-readable storage medium for storing a computer program is provided. When the computer program is executed by a processor, the registration method performed by the AMF is implemented.

According to an embodiment of the present disclosure, the terminal sends the first identifier of the terminal, the registration type and the identifier of the non-public network to be registered to the TNAN, thus realizing the terminal registering to the non-public network via an access network (such as TNAN) other than a 3GPP access network.

### BRIEF DESCRIPTION OF THE DRAWINGS

In order to clearly illustrate the technical solution of embodiments of the present disclosure, a brief description of drawings used in the embodiments is given below. Obviously, the drawings in the following descriptions are only part of the embodiments of the present disclosure, and for those skilled in the art, other drawings can be obtained according to these drawings without inventive works.
FIG. 1 is a flowchart illustrating a registration method according to an embodiment of the present disclosure.
FIG. 2 is a flowchart illustrating a registration method according to an embodiment of the present disclosure.
FIG. 3 is a flowchart illustrating a registration method according to an embodiment of the present disclosure.
FIG. 4 is a flowchart illustrating a registration method according to an embodiment of the present disclosure.
FIG. 5 is a flowchart illustrating a registration method according to an embodiment of the present disclosure.
FIG. 6 is a flowchart illustrating a registration method according to an embodiment of the present disclosure.
FIG. 7 is a flowchart illustrating a registration method according to an embodiment of the present disclosure.
FIG. 8 is a flowchart illustrating a registration method according to an embodiment of the present disclosure.
FIG. 9 is a flowchart illustrating a registration method according to an embodiment of the present disclosure.
FIG. 10 is a flowchart illustrating a registration method according to an embodiment of the present disclosure.
FIG. 11 is a flowchart illustrating a registration method according to an embodiment of the present disclosure.
FIG. 12 is a schematic diagram illustrating interaction between devices according to an embodiment of the present disclosure.
FIG. 13 is a block diagram illustrating a registration apparatus according to an embodiment of the present disclosure.
FIG. 14 is a block diagram illustrating a registration apparatus according to an embodiment of the present disclosure.
FIG. 15 is a block diagram illustrating a registration apparatus according to an embodiment of the present disclosure.
FIG. 16 is a block diagram illustrating a device for registration according to an embodiment of the present disclosure.

### DETAILED DESCRIPTION

The technical solutions in the embodiments of the disclosure will be clearly and completely described below in combination with the accompanying drawings in the embodiments of the disclosure. Obviously, the embodiments described are only a part of the embodiments of the disclosure, and not all of the embodiments. Based on the embodiments in the disclosure, all other embodiments obtained by those skilled in the art without inventive works fall within the scope of protection of the disclosure.

The terms used in the disclosure are only for the purpose of describing specific embodiments, and are not intended to limit the embodiments of the disclosure. The singular forms of "a" and "the" used in the disclosure are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

For the purpose of simplicity and ease of understanding, terms used in the disclosure to characterize size relationships are "greater than" or "less than", "higher than" or "lower than". But for those skilled in the art, it can be understood that: the term "greater than" also covers meaning of "greater than or equal to", and "less than" also covers meaning of "less than or equal to"; the term "higher than" covers meaning of "higher than or equal to", "lower than" also covers the meaning of "lower than or equal to".

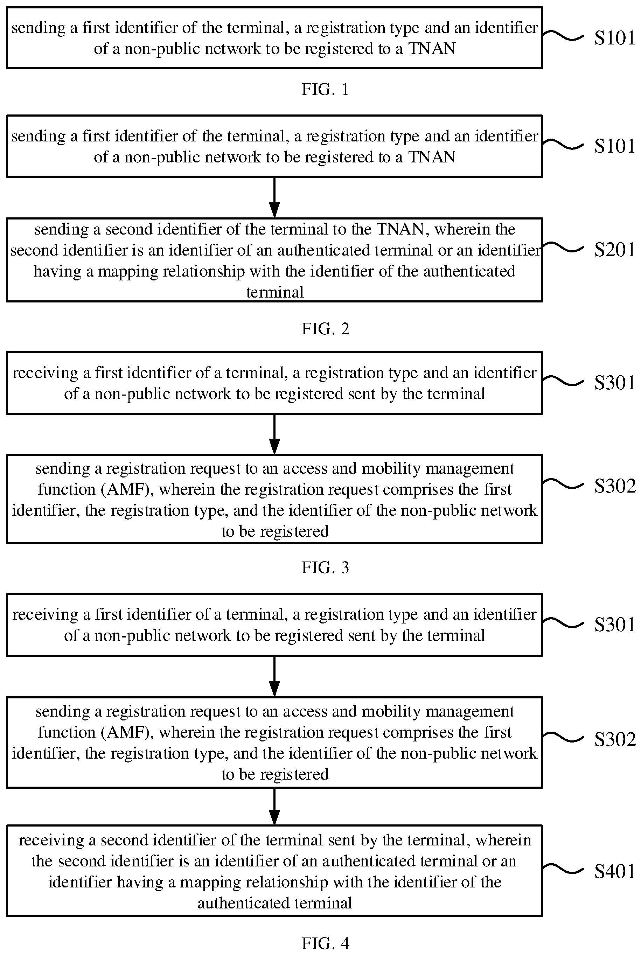

FIG. 1 is a flowchart illustrating a registration method according to an embodiment of the present disclosure. The method as illustrated in this embodiment may be performed by a terminal. The terminal may include, but not limited to, a cell phone, a tablet computer, a wearable device, a sensor, and an Internet of Things (IoT) device, and other communication devices.

As illustrated in FIG. 1, the registration method may include a following step.

At step 101, a first identifier of a terminal, a registration type and an identifier of a non-public network to be registered are sent to a trusted non-3rd generation partnership project access network (TNAN).

The non-public network may be a stand-alone non-public network (SNPN).

In all embodiments of the present disclosure, the TNAN may include a TNAP (trusted non-3GPP access point) and a TNGF (trusted non-3GPP gateway function).

Information sent by the terminal to the TNAN may be sent to the TNAP first, and then sent by the TNAP to the TNGF. The TNGF may further communicate with an AMF (access and mobility management function), for example, may send the information from the terminal to the AMF. Correspondingly, the information sent by the AMF to the TNAN may be first sent to the TNGF, and then sent by the TNGF to the TNAP. The TNAP may further communicate with the terminal, for example, may send the information from the AMF to the terminal. The terminal may communicate with the TNAN via a non-access stratum (NAS) signaling.

The AMF and an AUSF (authentication service function) in subsequent embodiments may be core network devices in the non-public network.

In an embodiment, in a case that the terminal is required to register to the non-public network, the first identifier of the terminal itself, the registration type and the identifier of the non-public network to be registered may be sent to the TNAN, specifically, may be sent to the TNAP first, and then sent to the TNGF by the TNAP. The identifier of the non-public network may include a PLMN (public land mobile network) identifier and a NID (network identifier).

The TNAN may select the core network device in the non-public network, such as the AMF, based on the identifier of the non-public network to which the terminal is to be registered, and send a registration request to the AMF. The registration request carries the first identifier of the terminal, the registration type and the identifier of the non-public network to be registered.

After receiving the registration request, the AMF may determine that the terminal needs to be registered, and may subsequently authenticate the terminal. An authenticated terminal may complete registration. The specific authentication method is not limited in the disclosure and may be selected as needed.

According to an embodiment of the present disclosure, the terminal sends the first identifier of the terminal, the registration type and the identifier of the non-public network to be registered to the TNAN, thus realizing the terminal registering to the non-public network via an access network (such as TNAN) other than a 3GPP access network.

In an embodiment, the registration type includes at least one of:
stand-alone non-public network onboarding (SNPN Onboarding);
initial registration; or
mobility registration update.

In an embodiment, the first identifier includes at least one of:
subscription permanent identifier (SUPI);
subscription concealed identifier (SUCI);
onboarding SUPI; or
onboarding SUCI.

In an embodiment, in a case that the registration type is the stand-alone non-public network onboarding (SNPN Onboarding), the first identifier includes the onboarding SUPI and/or the onboarding SUCI.

That is, in a case that the terminal needs to be registered for SNPN onboarding, the first identifier sent to the TNAN may be the onboarding SUPI or the onboarding SUCI. Then, in the registration request sent by the TNAN to the AMF, the first identifier may be the onboarding SUPI or the onboarding SUCI. In addition, in this case, the TNAN may not carry the registration type in the registration request sent to the AMF. The AMF may determine that the registration type is the SNPN onboarding based on the first identifier, which is beneficial to saving communication resources.

In an embodiment, when an identifier of a network to be registered is an identifier of a non-public network, and an authentication algorithm of the terminal supports SUPI privacy protection mechanism, the first identifier includes an anonymous identifier.

The authentication algorithm includes, but is not limited to, an EAP (extensible authentication protocol). The anonymous identifier may be obtained by ignoring a user name part in the SUCI or the onboarding SUCI of the terminal, or by uniformly setting the user name in the SUCI or the onboarding SUCI of the terminal to anonymous.

In a case that the terminal needs to be registered to the non-public network, the terminal may have privacy needs, for example, does not desire its user name to be leaked, then when the authentication algorithm of the terminal supports the SUPI privacy protection mechanism, the first identifier sent by the terminal to the TNAN may be the anonymous identifier. Therefore, the first identifier of the terminal in the registration request sent by the TNAN to the AMF is also the anonymous identifier. Accordingly, the terminal may not carry its own user name in the first identifier sent, to meet the privacy needs of the terminal.

FIG. 2 is a flowchart illustrating a registration method according to an embodiment of the present disclosure. As illustrated in FIG. 2, the method may include a following step.

At step 201, a second identifier of the terminal is sent to the TNAN, in which, the second identifier is an identifier of an authenticated terminal or an identifier having a mapping relationship with the identifier of the authenticated terminal.

In an embodiment, in a case that the first identifier sent by the terminal is an anonymous identifier, the TNAN cannot complete authentication of the terminal based on the anonymous identifier. Therefore, the terminal subsequently needs to send the second identifier to the TNAN. The second identifier is the identifier of the authenticated terminal, such as authenticated SUCI, onboarding SUCI, SUPI, and onboarding SUPI. Furthermore, the TNAN may complete the authentication of the terminal based on the second identifier, for example, authenticate the terminal based on an Internet key exchange (IKE) protocol.

The term "authenticated" refers to that it has passed authentication of a core network device or passed authentication of a default credential server (DCS).

The second identifier may also be the identifier having the mapping relationship with the identifier of the authenticated terminal. For example, the identifier of the authenticated terminal is the SUCI, then the identifier having the mapping relationship with the identifier of the authenticated terminal is the SUPI. For example, the identifier of the authenticated terminal is the SUPI, then the identifier having the mapping relationship with the identifier of the authenticated terminal is the SUCI.

In an embodiment, the SUCI may be generated based on the SUPI, and an algorithm for generating the SUCI based on the SUPI may be obtained from the TNAN.

For example, after receiving the first identifier of the terminal, the AMF sends the first identifier to the authentication service function (AUSF). The AUSF may authenticate the terminal based on the first identifier. After completing the authentication, the AUSF may determine that the identifier of the authenticated terminal is the second identifier.

In response to the second identifier determined by the AUSF being SUPI or onboarding SUPI, the second identifier sent by the terminal to the TNAN is the SUPI or onboarding SUPI. In this case, there is no need to generate SUCI or onboarding SUCI.

In response to the second identifier determined by the AUSF being the SUCI or onboarding SUCI, the second identifier sent by the terminal to the TNAN is the SUCI or onboarding SUCI. In this case, there is a need to generate the SUCI or onboarding SUCI, then the AUSF is required to send to the AMF the algorithm for generating the SUCI based on the SUPI, further the algorithm is sent to the TNAN by the AMF, and then is sent to the terminal by the TNAN. Accordingly, the terminal may generate the SUCI or onboarding SUCI based on the received algorithm, and send the SUCI or onboarding SUCI, as the second identifier, to the TNAN.

In addition, in response to the terminal failing to receive the algorithm for generating the SUCI based on the SUPI, the terminal generates the SUCI based on the SUPI as needed, and sends the generated SUCI to the TNAN, then the TNAN sends the SUCI to the AMF. In this case, in response to the AMF being able to determine a key corresponding to the received SUCI based on a mapping relationship, then the AMF may send the key to the TNGF, and the TNGF may start authenticating the terminal based on the key. In response to the AMF failing to determine the key corresponding to the received SUCI based on the mapping relationship, the AMF may send the SUCI to the AUSF, the AUSF obtains the SUPI by decrypting the SUCI, and sends the SUPI to the AMF. The AMF determines the key based on the SUPI, and may send the key to the TNGF, and the TNGF may authenticate the terminal based on the key.

FIG. 3 is a flowchart illustrating a registration method according to an embodiment of the present disclosure. The registration method illustrated in this embodiment may be performed by a trusted non-3rd generation partnership project access network (TNAN). The TNAN may include two parts of a TNAP and a TNGF. The TNAN may communicate with a terminal, and may also communicate with an AMF in a non-public network.

As illustrated in FIG. 3, the registration method may include the following steps.

At step S301, a first identifier of a terminal, a registration type and an identifier of a non-public network to be registered sent by the terminal are received.

At step S302, a registration request is sent to an access and mobility management function (AMF), in which, the registration request includes the first identifier, the registration type, and the identifier of the non-public network to be registered.

In an embodiment, in a case that the terminal is required to register to the non-public network, the first identifier of the terminal itself, the registration type and the identifier of the non-public network to be registered may be sent to the TNAN, specifically, may be sent to the TNAP first, and then sent to the TNGF by the TNAP. The identifier of the non-public network may include a PLMN identifier and a NID.

The TNAN may select the core network device in the non-public network, such as the AMF, based on the identifier of the non-public network to which the terminal is to be registered, and send a registration request to the AMF. The registration request carries the first identifier of the terminal, the registration type and the identifier of the non-public network to be registered.

After receiving the registration request, the AMF may determine that the terminal needs to be registered, and may subsequently authenticate the terminal. An authenticated terminal may complete registration. The specific authentication method is not limited in the disclosure and may be selected as needed.

According to an embodiment of the present disclosure, the TNAN may receive the first identifier, the registration type and the identifier of the non-public network to be registered sent by the terminal, and may subsequently send the registration request to the AMF, and the first identifier, the registration type, and the identifier of the non-public network to be registered may be carried in the registration request, such that the terminal may register to the non-public network. This may realize the terminal registering to the non-public network via an access network (such as TNAN) other than a 3GPP access network.

In an embodiment, the registration type includes at least one of: stand-alone non-public network onboarding; initial registration; or mobility registration update.

In an embodiment, the first identifier includes at least one of: subscription permanent identifier (SUPI); subscription concealed identifier (SUCI); onboarding SUPI; or onboarding SUCI.

In an embodiment, in a case that the registration type is the stand-alone non-public network onboarding, the first identifier includes the onboarding SUPI and/or the onboarding SUCI.

In a case that the terminal needs to be registered for SNPN onboarding, the first identifier received by the TNAN from the terminal may be the onboarding SUPI or the onboarding SUCI. Then, in the registration request sent by the TNAN to the AMF, the first identifier may be the onboarding SUPI or the onboarding SUCI. In addition, in this case, the TNAN may not carry the registration type in the registration request sent to the AMF. The AMF may determine that the registration type is the SNPN onboarding based on the first identifier, which is beneficial to saving communication resources.

In an embodiment, when an identifier of a network to be registered is an identifier of a non-public network, and an authentication algorithm of the terminal supports SUPI privacy protection mechanism, the first identifier includes an anonymous identifier.

The authentication algorithm includes, but is not limited to, an EAP. The anonymous identifier may be obtained by ignoring a user name part in the SUCI or the onboarding SUCI of the terminal, or by uniformly setting the user name in the SUCI or the onboarding SUCI of the terminal to anonymous.

In a case that the terminal needs to be registered to the non-public network, the terminal may have privacy needs, for example, does not desire its user name to be leaked, then when the authentication algorithm of the terminal supports the SUPI privacy protection mechanism, the first identifier received by the TNAN from the terminal may be the anonymous identifier. Therefore, the first identifier of the terminal in the registration request sent by the TNAN to the AMF is also the anonymous identifier. Accordingly, the terminal may not carry its own user name in the first identifier sent, to meet the privacy needs of the terminal.

FIG. 4 is a flowchart illustrating a registration method according to an embodiment of the present disclosure. As illustrated in FIG. 4, the method may include a following step.

At step S401, a second identifier of the terminal sent by the terminal is received, in which, the second identifier is an identifier of an authenticated terminal or an identifier having a mapping relationship with the identifier of the authenticated terminal.

In an embodiment, in a case that the first identifier received from the terminal is an anonymous identifier, the TNAN cannot complete authentication of the terminal based on the anonymous identifier. Therefore, the TNAN subsequently needs to receive the second identifier from the terminal. The second identifier is the identifier of the authenticated terminal, such as authenticated SUCI, onboarding SUCI, SUPI, and onboarding SUPI. Furthermore, the TNAN may complete the authentication of the terminal based on the second identifier, for example, authenticate the terminal based on an Internet key exchange (IKE) protocol.

The term "authenticated" refers to that it has passed authentication of a core network device or passed authentication of a default credential server (DCS).

The second identifier may also be the identifier having the mapping relationship with the identifier of the authenticated terminal. For example, the identifier of the authenticated terminal is the SUCI, then the identifier having the mapping relationship with the identifier of the authenticated terminal is the SUPI. For example, the identifier of the authenticated terminal is the SUPI, then the identifier having the mapping relationship with the identifier of the authenticated terminal is the SUCI.

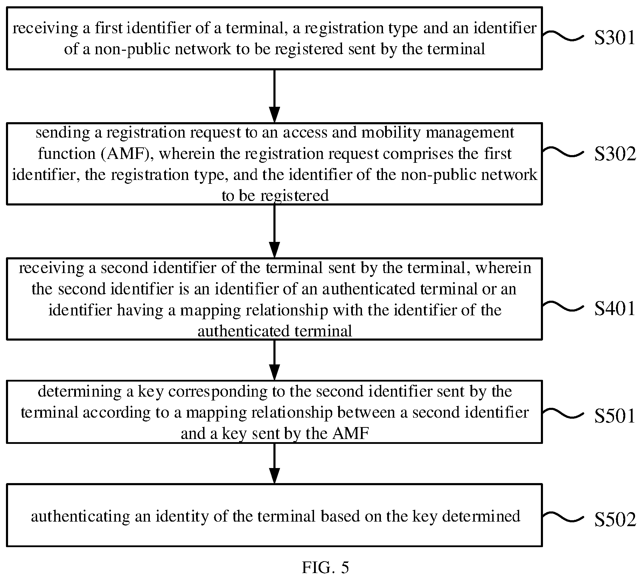

FIG. 5 is a flowchart illustrating a registration method according to an embodiment of the present disclosure. As illustrated in FIG. 5, the method may include the following steps.

At step S501, a key corresponding to the second identifier sent by the terminal is determined according to a mapping relationship between a second identifier and a key sent by the AMF.

At step S502, an identity of the terminal is authenticated based on the key determined
In an embodiment, the AMF may send the mapping relationship between the second identifier and the key to the TNAN. After receiving the second identifier from the terminal, the TNAN may determine the key corresponding to the second identifier based on the mapping relationship, and then authenticate the identity of the terminal based on the key determined.

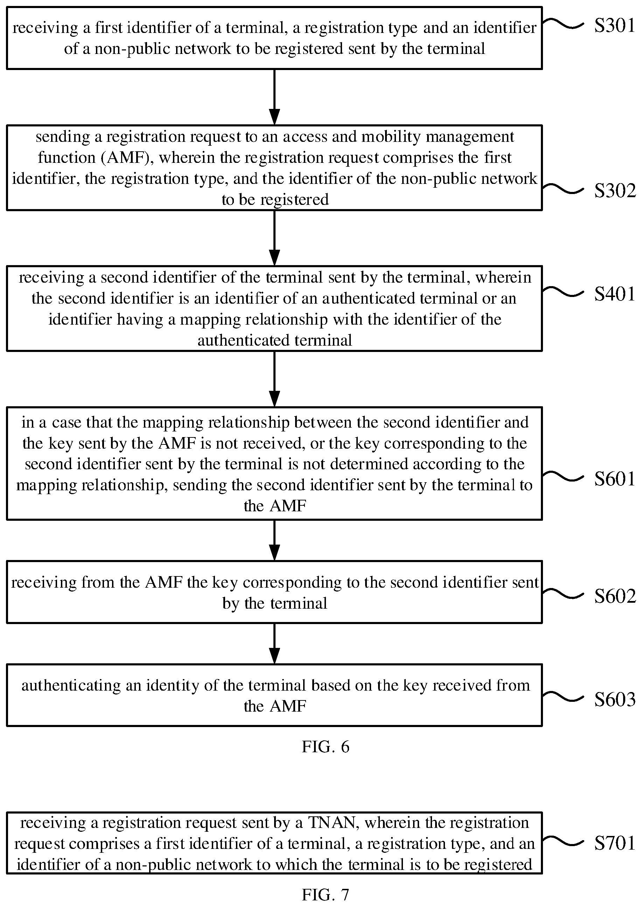

FIG. 6 is a flowchart illustrating a registration method according to an embodiment of the present disclosure. As illustrated in FIG. 6, the method may further include the following steps.

At step S601, in a case that the mapping relationship between the second identifier and the key sent by the AMF is not received, or the key corresponding to the second identifier sent by the terminal is not determined according to the mapping relationship, the second identifier sent by the terminal is sent to the AMF.

At step S602, the key corresponding to the second identifier sent by the terminal is received from the AMF.

At step S603, an identity of the terminal is authenticated based on the key received from the AMF.

In an embodiment, in response to the AMF sending no mapping relationship between the second identifier and the key to the TNAN, or the TNAN failing to determine the key corresponding to the second identifier sent by the terminal according to the mapping relationship, then TNAN may further send the second identifier sent by the terminal to the AMF.

In response to the second identifier being SUPI (or onboarding SUPI), the AMF may determine a key corresponding to the SUPI sent by the TNAN based on a mapping relationship between a SUPI and a key stored in the AMF and send the key to the TNAN. Then the TNAN may authenticate the identity of the terminal based on the key received from the AMF.

In response to the second identifier being SUCI (or onboarding SUCI), the AMF may further send the SUPI sent by the TNAN to the AUSF, and the AUSF may determine an authenticated SUPI corresponding to the SUCI (for example, by decrypting the SUCI), and send the determined SUPI to the AMF. The AMF may determine the key corresponding to the SUPI sent by AUSF based on the mapping relationship between the SUPI and the key stored in the AMF this time and send the key to the TNAN. Then the TNAN may authenticate the identity of the terminal based on the key received from the AMF.

FIG. 7 is a flowchart illustrating a registration method according to an embodiment of the present disclosure. The registration method illustrated in this embodiment may be performed by an access and mobility management function (AMF). The AMF may communicate with a TNAN, may also communicate with an AUSF.

As illustrated in FIG. 7, the registration method may include a following step.

At step S701, a registration request sent by a trusted non-3rd generation partnership project access network (TNAN) is received, in which, the registration request includes a first identifier of a terminal, a registration type, and an identifier of a non-public network to which the terminal is to be registered.

In an embodiment, in a case that the terminal is required to register to the non-public network, the first identifier of the terminal itself, the registration type and the identifier of the non-public network to be registered may be sent to the TNAN, specifically, may be sent to the TNAP first, and then sent to the TNGF by the TNAP. The identifier of the non-public network may include a PLMN identifier and a NID.

The TNAN may select the core network device in the non-public network, such as the AMF, based on the identifier of the non-public network to which the terminal is to be registered, and send a registration request to the AMF. The registration request carries the first identifier of the terminal, the registration type and the identifier of the non-public network to be registered.

After receiving the registration request, the AMF may determine that the terminal needs to be registered (and the registration type) according to the first identifier of the terminal, the registration type, and the identifier of the non-public network to which the terminal is to be registered in the registration request, and may subsequently authenticate the terminal. An authenticated terminal may complete registration. The specific authentication method is not limited in the disclosure and may be selected as needed.

According to an embodiment of the present disclosure, after receiving the first identifier, the registration type and the identifier of the non-public network to be registered sent by the terminal, the TNAN may generate the registration request and send the registration request to the AMF, and the AMF may generate the terminal based on information such as the first identifier, the registration type, and the identifier of the non-public network to be registered in the registration request. This may realize the terminal registering to the non-public network via an access network (such as TNAN) other than a 3GPP access network.

In an embodiment, the registration type includes at least one of: stand-alone non-public network onboarding; initial registration; or mobility registration update.

In an embodiment, the first identifier includes at least one of: subscription permanent identifier (SUPI); subscription concealed identifier (SUCI); onboarding SUPI; or onboarding SUCI.

In an embodiment, in a case that the registration type is the stand-alone non-public network onboarding, the first identifier includes the onboarding SUPI and/or the onboarding SUCI.

In a case that the terminal needs to be registered for SNPN onboarding, the first identifier received by the AMF from the registration request may be the onboarding SUPI or the onboarding SUCI. In addition, in this case, the TNAN may not carry the registration type in the registration request sent to the AMF. The AMF may determine that the registration type is the SNPN onboarding based on the first identifier, which is beneficial to saving communication resources.

In an embodiment, when an identifier of a network to be registered is an identifier of a non-public network, and an authentication algorithm of the terminal supports SUPI privacy protection mechanism, the first identifier includes an anonymous identifier.

The authentication algorithm includes, but is not limited to, an EAP. The anonymous identifier may be obtained by ignoring a user name part in the SUCI or the onboarding SUCI of the terminal, or by uniformly setting the user name in the SUCI or the onboarding SUCI of the terminal to anonymous.

In a case that the terminal needs to be registered to the non-public network, the terminal may have privacy needs, for example, does not desire its user name to be leaked, then when the authentication algorithm of the terminal supports the SUPI privacy protection mechanism, the first identifier received by the AMF from the registration request may be the anonymous identifier. Further, the AMF may send the anonymous identifier to the AUSF for authenticating the terminal. Accordingly, the terminal may not carry its own user name in the first identifier sent, to meet the privacy needs of the terminal.

In an embodiment, the method further includes: in a case that the registration type is the stand-alone non-public network onboarding, determining that the terminal is to be registered for onboarding.

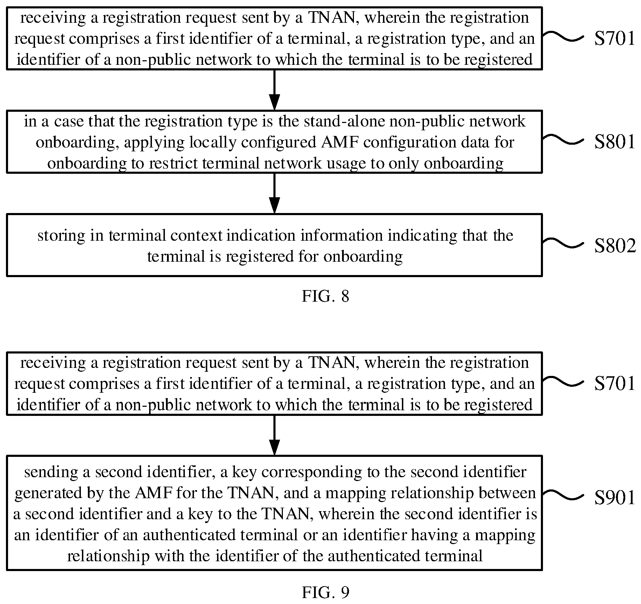

FIG. 8 is a flowchart illustrating a registration method according to an embodiment of the present disclosure. As illustrated in FIG. 8, the method further includes the following steps.

At step S801, in a case that the registration type is the stand-alone non-public network onboarding, locally configured AMF configuration data for onboarding is applied to restrict terminal network usage to only onboarding.

At step S802, indication information indicating that the terminal is registered for onboarding is stored in terminal context.

In an embodiment, in a case that the AMF determines that the registration type in the registration request is SNPN onboarding, the AMF can apply the locally configured AMF configuration data for onboarding to restrict the terminal network usage to only onboarding, and may store the indication information indicating that the terminal is registered for onboarding in the terminal context. Therefore, it may avoid the terminal network from being abused for other purposes on the basic of meeting the registration type that the terminal needs.

FIG. 9 is a flowchart illustrating a registration method according to an embodiment of the present disclosure. As illustrated in FIG. 9, the method further includes a following step.

At step S901, a second identifier, a key corresponding to the second identifier generated by the AMF for the TNAN (for example, may be a key k_{TNGF} generated for the TNGF), and a mapping relationship between a second identifier and a key are sent to the TNAN, in which, the second identifier is an identifier of an authenticated terminal or an identifier having a mapping relationship with the identifier of the authenticated terminal.

In an embodiment, the AMF may send to the TNAN the second identifier, the key corresponding to the second identifier generated by the AMF for the TNAN (related to the second identifier, for example, determined based on relevant parameters of the second identifier), the mapping relationship between the second identifier and the key (for example, a relationship between the second identifier and an index of the key). Accordingly, after receiving the second identifier from the terminal, the TNAN may determine the key corresponding to the second identifier according to the mapping relationship, and then authenticate the identity of the terminal based on the determined key.

The term "authenticated" refers to that it has passed authentication of a core network device or passed authentication of a default credential server (DCS).

The second identifier may also be the identifier having the mapping relationship with the identifier of the authenticated terminal. For example, the identifier of the authenticated terminal is the SUCI, then the identifier having the mapping relationship with the identifier of the authenticated terminal is the SUPI. For example, the identifier of the authenticated terminal is the SUPI, then the identifier having the mapping relationship with the identifier of the authenticated terminal is the SUCI.

In an embodiment, the SUCI may be generated based on the SUPI, and an algorithm for generating the SUCI based on the SUPI may be obtained from the TNAN.

For example, after receiving the first identifier of the terminal, the AMF sends the first identifier to the authentication service function (AUSF). The AUSF may authenticate the terminal based on the first identifier. After completing the authentication, the AUSF may determine that the identifier of the authenticated terminal is the second identifier.

In response to the second identifier determined by the AUSF being SUPI or onboarding SUPI, the second identifier sent by the terminal to the TNAN is the SUPI or onboarding SUPI. In this case, there is no need to generate SUCI or onboarding SUCI.

In response to the second identifier determined by the AUSF being the SUCI (generated based on the determined SUPI) or onboarding SUCI (generated based on the determined onboarding SUPI), the second identifier sent by the terminal to the TNAN is the SUCI or onboarding SUCI. In this case, there is a need to generate the SUCI or onboarding SUCI, then the AUSF is required to send to the AMF the algorithm for generating the SUCI based on the SUPI, further the algorithm is sent to the TNAN by the AMF, and then is sent to the terminal by the TNAN. Accordingly, the terminal may generate the SUCI or onboarding SUCI based on the received algorithm, and send the SUCI or onboarding SUCI, as the second identifier, to the TNAN.

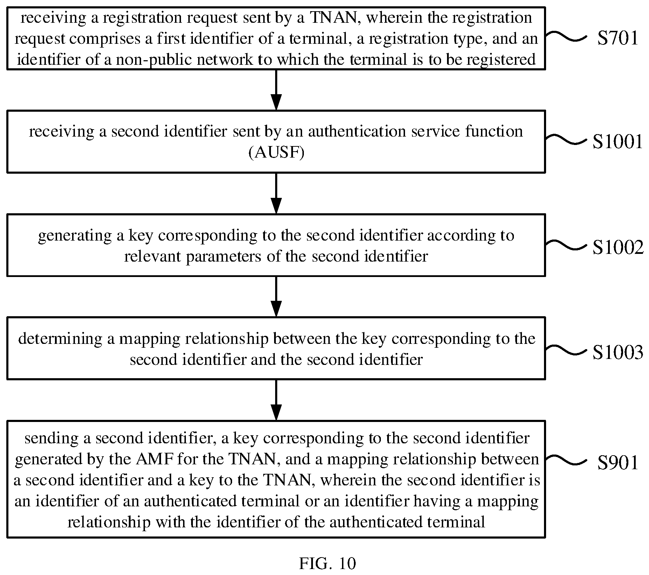

FIG. 10 is a flowchart illustrating a registration method according to an embodiment of the present disclosure. As illustrated in FIG. 10, the method further includes a following step.

At step S1001, a second identifier sent by an authentication service function (AUSF) is received.

At step S1002, a key corresponding to the second identifier is generated according to relevant parameters of the second identifier.

At step S1003, a mapping relationship between the key corresponding to the second identifier and the second identifier is determined.

In an embodiment, the AUSF may send the second identifier to the AMF, and the AMF may generate the key corresponding to the second identifier according to the relevant parameters of the second identifier, such as a key for the TNAN to authenticate the identity of the terminal, that is, a key k_{TNGF} generated by the AMF for the TNAN (specifically, may be a TNGF). The AMF may generate a key k_{AMF} at least based on SUPI, and then derive k_{TNGF} based on at least k_{AMF}, and take k_{TNGF} as the key corresponding to the second identifier. Further, the AMF may determine a mapping relationship between k_{TNGF} and the second identifier, and subsequently send the mapping relationship to the TNAN to determine k_{TNGF} in order to authenticate the identity of the terminal.

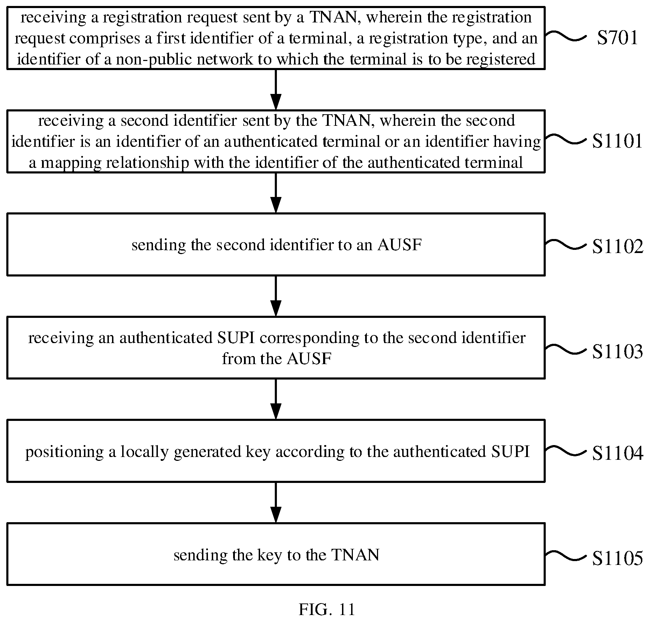

FIG. 11 is a flowchart illustrating a registration method according to an embodiment of the present disclosure. As illustrated in FIG. 11, the method further includes a following step.

At step S1101, a second identifier sent by the TNAN is received, in which, the second identifier is an identifier of an authenticated terminal or an identifier having a mapping relationship with the identifier of the authenticated terminal.

At step S1102, the second identifier is sent to an AUSF.

At step S1103, an authenticated SUPI corresponding to the second identifier is received from the AUSF.

At step S1104, a locally generated key is positioned according to the authenticated SUPI.

At step S1105, the key is sent to the TNAN.

In an embodiment, in response to the AMF sending no mapping relationship between the second identifier and the key to the TNAN, or the TNAN failing to determine the key corresponding to the second identifier sent by the terminal according to the mapping relationship, then TNAN may further send the second identifier sent by the terminal to the AMF.

In response to the second identifier being SUCI (or onboarding SUCI), the AMF may further send the SUPI sent by the TNAN to the AUSF, and the AUSF may determine an authenticated SUPI corresponding to the SUCI (for example, by decrypting the SUCI), and send the determined SUPI to the AMF. The AMF may position the locally generated key, for example, may determine the key corresponding to the SUPI sent by AUSF based on the mapping relationship between the SUPI and the key stored in the AMF this time and send the key to the TNAN. Then the TNAN may authenticate the identity of the terminal based on the key received from the AMF.

In response to the second identifier being SUPI (or onboarding SUPI), the AMF may determine a key corresponding to the SUPI sent by the TNAN based on a mapping relationship between a SUPI and a key stored in the AMF and send the key to the TNAN. Then the TNAN may authenticate the identity of the terminal based on the key received from the AMF.

An embodiment of the present disclosure also provides an identifier sending method. The registration method illustrated in this embodiment may be executed by an AUSF, and the AUSF may communicate with an AMF.

In an embodiment, the identifier sending method includes:
A second identifier of the terminal for registering to the AMF, in which, the second identifier is an identifier of an authenticated terminal or an identifier having a mapping relationship with the identifier of the authenticated terminal.

For example, authenticated SUCI, onboarding SUCI, SUPI, and onboarding SUPI. Furthermore, the TNAN may complete the authentication of the terminal based on the second identifier, for example, authenticate the terminal based on an Internet key exchange (IKE) protocol.

In an embodiment, the method further includes:
receiving the first identifier of the terminal sent by the AMF;
authenticating the terminal according to the first identifier.
In an embodiment, the method further includes:
receiving the registration type sent by the AMF for registering the terminal.

In an embodiment, in a case that the first identifier is an anonymous identifier, the second identifier of the terminal for registering is sent to the AMF.

In an embodiment, the method further includes:
generating SUCI based on SUPI of the authenticated terminal (e.g. by decrypting the SUPI);
sending an algorithm for generating the SUCI based on the SUPI to the AMF.
In an embodiment, the method further includes:
generating the SUPI based on the SUCI of the authenticated terminal sent by the AMF (for example, by decrypting the SUCI);
sending the SUPI to the AMF.

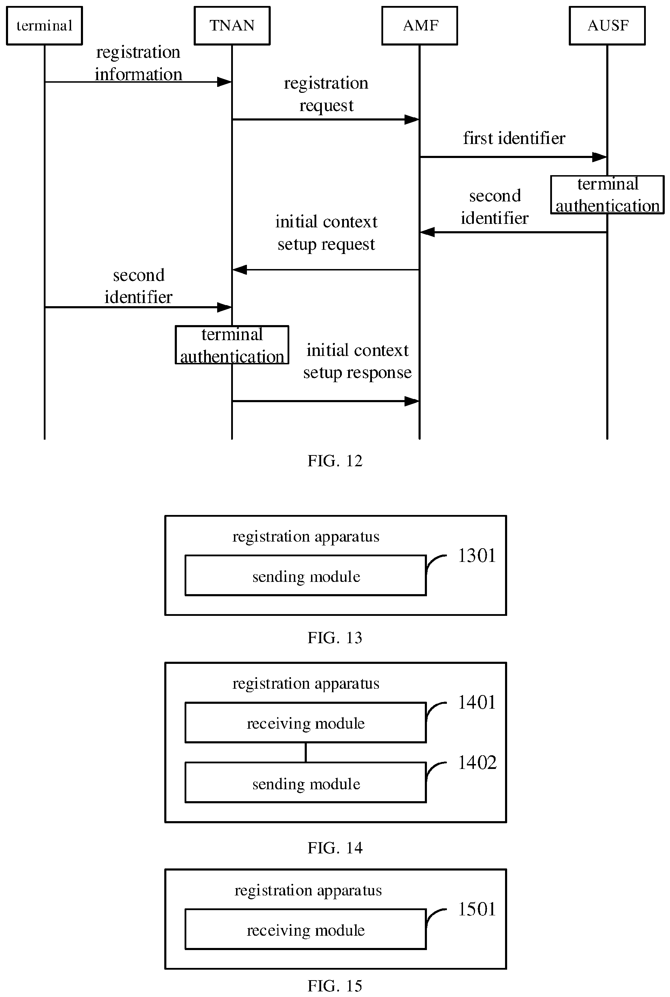

FIG. 12 is a schematic diagram illustrating interaction between devices according to an embodiment of the present disclosure.

As illustrated in FIG. 12, during a process of a terminal registering to a non-public network via a TNAN, the terminal may communicate with core network devices in non-public networks such as an AMF and an AUSF via the TNAN.

When the terminal needs to be registered to the non-public network, the terminal may send registration information (such as a first identifier of the terminal, a registration type and an identifier of the non-public network to be registered) to the TNAN. Specifically, the registration information may be sent to a TNAP first, and then sent to a TNGF by the TNAP.

The TNAN may determine that the terminal needs to be registered based on the received registration information, and then may select the AMF based on the identifier of the non-public network to be registered, and send a registration request to the AMF. The registration request includes the first identifier of the terminal, the registration type, and the identifier of the non-public network to be registered.

After receiving the registration request, the AMF may send the first identifier to the AUSF, and the AUSF may authenticate the terminal based on the first identifier.

In a case where the first identifier is an anonymous identifier, the AUSF may send the second identifier of the terminal to the AMF, and the second identifier is an identifier of an authenticated terminal or an identifier having a mapping relationship with the identifier of the authenticated terminal. The AMF may generate a key corresponding to the second identifier, and send to the TNAN a key k_{TNGF} for the TNAN to authenticate an identity of the terminal, the second identifier, and a mapping relationship between the second identifier and k_{TNGF}.

Subsequently, the AMF may send an initial context setup request to the TNAN. After receiving the initial context setup request, the TNAN may authenticate the identity of the terminal.

For example, in a case where the first identifier is not the anonymous identifier, the TNAN may directly authenticate the identity of the terminal based on the first identifier. While in a case where the first identifier is the anonymous identifier, the terminal also needs to send the second identifier to the TNAN, and the TNAN may determine the key corresponding to the second identifier according to the mapping relationship sent by the AMF, and authenticate the identity of the terminal based on the determined key. After completing the authentication, the TNAN may return an initial context setup response to the AMF.

In response to the TNAN failing to receive the mapping relationship between the second identifier and the key sent by the AMF, or not determining the key corresponding to the second identifier sent by the terminal according to the mapping relationship, the second identifier sent by the terminal is sent to the AMF;

In response to the second identifier being SUPI (or onboarding SUPI), the AMF may determine a key corresponding to the SUPI sent by the TNAN based on a mapping relationship between a SUPI and a key stored in the AMF and send the key to the TNAN. Then the TNAN may authenticate the identity of the terminal based on the key received from the AMF.

In response to the second identifier being SUCI (or onboarding SUCI), the AMF may further send the SUPI sent by the TNAN to the AUSF, and the AUSF may determine an authenticated SUPI corresponding to the SUCI (for example, by decrypting the SUCI), and send the determined SUPI to the AMF. The AMF may determine the key corresponding to the SUPI sent by AUSF based on the mapping relationship between the SUPI and the key stored in the AMF this time and send the key to the TNAN. Then the TNAN may authenticate the identity of the terminal based on the key received from the AMF.

Embodiments of the present disclosure also provide a registration system, including a terminal, a trusted non-3rd generation partnership project access network (TNAN) and an access and mobility management function (AMF), in which, the terminal is configured to perform the registration method performed by the terminal as described in any one of the above embodiments, the TNAN is configured to perform the registration method performed by the TNAN as described in any of the above embodiments, the AMF is configured to perform the registration method performed by the AMF as described in any one of the above embodiments.

Corresponding to the embodiments of the foregoing registration method, the present disclosure also provides embodiments of a registration apparatus.

FIG. 13 is a block diagram illustrating a registration apparatus according to an embodiment of the present disclosure. The registration apparatus illustrated in this embodiment may be a terminal, or an apparatus composed of modules in the terminal. The terminal includes but is not limited to communication devices such as a mobile phone, a tablet computer, a wearable device, a sensor, and an Internet of Things device.

As illustrated in FIG. 13, the registration apparatus may include:
a sending module 1301, configured to send a first identifier of a terminal, a registration type and an identifier of a non-public network to be registered to a trusted non-3rd generation partnership project access network (TNAN).

In an embodiment, the registration type includes at least one of: stand-alone non-public network onboarding; initial registration; or mobility registration update.

In an embodiment, the first identifier includes at least one of: subscription permanent identifier (SUPI); subscription concealed identifier (SUCI); onboarding SUPI; or onboarding SUCI.

In an embodiment, in a case that the registration type is the stand-alone non-public network onboarding, the first identifier includes the onboarding SUPI and/or the onboarding SUCI.

In an embodiment, when an identifier of a network to be registered is an identifier of a non-public network, and an authentication algorithm of the terminal supports SUPI privacy protection mechanism, the first identifier includes an anonymous identifier.

In an embodiment, the sending module is further configured to send a second identifier of the terminal to the TNAN, in which, the second identifier is an identifier of an authenticated terminal or an identifier having a mapping relationship with the identifier of the authenticated terminal.

FIG. 14 is a block diagram illustrating a registration apparatus according to an embodiment of the present disclosure. The registration apparatus illustrated in this embodiment may be a trusted non-3rd generation partnership project access network (TNAN), or an apparatus composed of modules in the TNAN. The TNAN may include two parts: a TNAP and a TNGF. The TNAN may communicate with a terminal, or may also communicate with an AMF in a non-public network.

As illustrated in FIG. 14, the registration apparatus may include:
a receiving module 1401, configured to receive a first identifier of a terminal, a registration type and an identifier of a non-public network to be registered sent by the terminal; and
a sending module 1402, configured to send aa registration request to an access and mobility management function (AMF), wherein the registration request comprises the first identifier, the registration type, and the identifier of the non-public network to be registered.

In an embodiment, the registration type includes at least one of: stand-alone non-public network onboarding; initial registration; or mobility registration update.

In an embodiment, the first identifier includes at least one of: subscription permanent identifier (SUPI); subscription concealed identifier (SUCI); onboarding SUPI; or onboarding SUCI.

In an embodiment, in a case that the registration type is the stand-alone non-public network onboarding, the first identifier includes the onboarding SUPI and/or the onboarding SUCI.

In an embodiment, when an identifier of a network to be registered is an identifier of a non-public network, and an authentication algorithm of the terminal supports SUPI privacy protection mechanism, the first identifier includes an anonymous identifier.

In an embodiment, the receiving module is configured to receive a second identifier of the terminal sent by the terminal, in which, the second identifier is an identifier of an authenticated terminal or an identifier having a mapping relationship with the identifier of the authenticated terminal.

In an embodiment, the apparatus further includes a processing module, configured to determine a key corresponding to the second identifier sent by the terminal according to a mapping relationship between a second identifier and a key sent by the AMF; and authenticate an identity of the terminal based on the key determined.

In an embodiment, the sending module is further configured to, in a case that the mapping relationship between the second identifier and the key sent by the AMF is not received, or the key corresponding to the second identifier sent by the terminal is not determined according to the mapping relationship, send the second identifier sent by the terminal to the AMF; the receiving module is further configured to, receive from the AMF the key corresponding to the second identifier sent by the terminal; the apparatus further includes a processing module, configured to authenticate an identity of the terminal based on the key received from the AMF.

FIG. 15 is a block diagram illustrating a registration apparatus according to an embodiment of the present disclosure. The registration apparatus illustrated in this embodiment may be an access and mobility management function (AMF), or an apparatus composed of modules in the AMF. The AMF may communicate with a TNAN, or may also communicate with an AUSF.

As illustrated in FIG. 15, the registration apparatus may include:
a receiving module 1501, configured to receive a registration request sent by a trusted non-3rd generation partnership project access network (TNAN), in which, the registration request includes a first identifier of a terminal, a registration type, and an identifier of a non-public network to which the terminal is to be registered.

In an embodiment, the registration type includes at least one of: stand-alone non-public network onboarding; initial registration; or mobility registration update.

In an embodiment, the first identifier includes at least one of: subscription permanent identifier (SUPI); subscription concealed identifier (SUCI); onboarding SUPI; or onboarding SUCI.

In an embodiment, the apparatus further includes a processing module, configured to, in a case that the registration type is the stand-alone non-public network onboarding, determine that the terminal is to be registered for onboarding.

In an embodiment, in a case that the registration type is the stand-alone non-public network onboarding, the first identifier includes the onboarding SUPI and/or the onboarding SUCI.

In an embodiment, when an identifier of a network to be registered is an identifier of a non-public network, and an authentication algorithm of the terminal supports SUPI privacy protection mechanism, the first identifier includes an anonymous identifier.

In an embodiment, the apparatus further includes a sending module, configured to, send a second identifier, a key corresponding to the second identifier generated by the AMF for the TNAN, and a mapping relationship between a second identifier and a key to the TNAN, in which, the second identifier is an identifier of an authenticated terminal or an identifier having a mapping relationship with the identifier of the authenticated terminal.

In an embodiment, the sending module is further configured to receive a second identifier sent by an authentication service function (AUSF); the apparatus further includes a processing module, configured to, generate a key corresponding to the second identifier according to relevant parameters of the second identifier; determine a mapping relationship between the key corresponding to the second identifier and the second identifier.

In an embodiment, the receiving module is further configured to receive a second identifier sent by the TNAN, in which, the second identifier is an identifier of an authenticated terminal or an identifier having a mapping relationship with the identifier of the authenticated terminal; the apparatus further includes a sending module, configured to send the second identifier to an AUSF; the receiving module is further configured to receive an authenticated SUPI corresponding to the second identifier from the AUSF; the apparatus further includes a processing module, configured to position a locally generated key according to the authenticated SUPI; and the sending module is further configured to send the key to the TNAN.

In an embodiment, the apparatus further includes a processing module, configured to, in a case that the registration type is the stand-alone non-public network onboarding, apply locally configured AMF configuration data for onboarding to restrict terminal network usage to only onboarding; store in terminal context indication information indicating that the terminal is registered for onboarding.

With respect to the apparatus in the above embodiments, specific implementations in which each module performs an operation has been described in detail in the method embodiments and will not be elaborated here.

The apparatus embodiments basically correspond to the method embodiments, and the related contents can refer to part of the descriptions of the method embodiments. The above-described apparatus embodiments are merely schematic, the modules described above as separate components may or may not be physically separated, and the components displayed as modules may or may not be physical modules, i.e., the components may be located in one area or may be distributed to multiple network modules. Some or all of these modules can be selected according to practical needs to achieve the purpose of the solution of the disclosure. Those skilled in the art can understand and implement the solution without inventive works.

An embodiment of the present disclosure also provides a communication device. The communication device includes: a processor, a memory for storing a computer program. When the computer program is executed by the processor, the registration method performed by the terminal as described in any one of the above embodiments is implemented.

An embodiment of the present disclosure also provides a communication device. The communication device includes: a processor, a memory for storing a computer program. When the computer program is executed by the processor, the registration method performed by the TNAN as described in any one of the above embodiments is implemented.

An embodiment of the present disclosure also provides a communication device. The communication device includes: a processor, a memory for storing a computer program. When the computer program is executed by the processor, the registration method performed by the AMF as described in any one of the above embodiments is implemented.

An embodiment of the present disclosure also provides a computer-readable storage medium for storing a computer program. When the computer program is executed by a processor, the registration method performed by the terminal as described in any one of the above embodiments is implemented.

An embodiment of the present disclosure also provides a computer-readable storage medium for storing a computer program. When the computer program is executed by a processor, the registration method performed by the TNAN as described in any one of the above embodiments is implemented.

An embodiment of the present disclosure also provides a computer-readable storage medium for storing a computer program. When the computer program is executed by a processor, the registration method performed by the AMF as described in any one of the above embodiments is implemented.

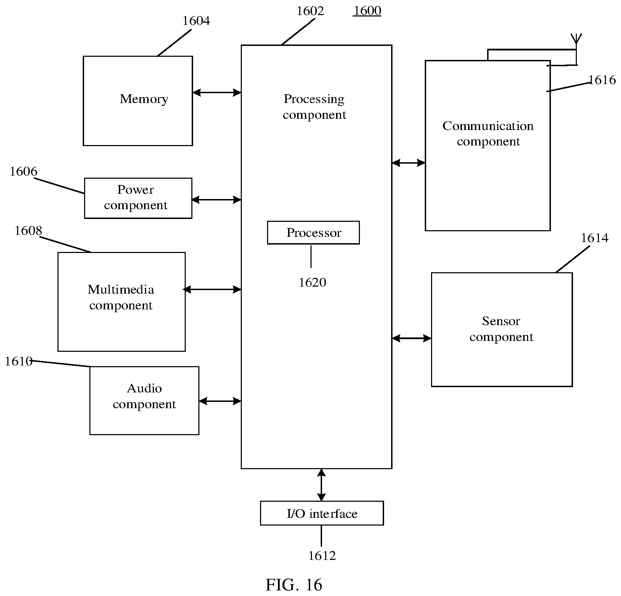

FIG. 16 is a block diagram illustrating a device 1600 for registration according to an embodiment of the present disclosure. For example, the device 1600 may be a mobile phone, a computer, a digital broadcast terminal, a message transceiver device, a game console, a tablet device, a medical device, a fitness device or a personal digital assistant, etc.

As illustrated in FIG. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as the operations associated with display, telephone calls, data communications, camera operations, and recording operations. The processing component 1602 may include one or more processors 1620 to perform all or part of the steps in the above described methods. Moreover, the processing component 1602 may include one or more modules which facilitate the interaction between the processing component 1602 and other components. For example, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power in the device 1600.

The multimedia component 1608 includes a screen providing an output interface between the device 1600 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1608 includes a front-facing camera and/or a rear-facing camera. When the device 1600 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1610 is configured to output and/or input audio signals. For example, the audio component 1610 includes a microphone (MIC) configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the device 1600. For instance, the sensor component 1614 may detect an open/closed status of the device 1600, relative positioning of components, e.g., the display and the keypad, of the device 1600, a change in position of the device 1600 or a component of the device 1600, a presence or absence of user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may also include a light sensor, such as a Complementary Metal Oxide Semiconductor (CMOS) or Charge-Coupled Device (CCD) image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the device 1600 and other devices. The device 1600 can access a wireless network based on a communication standard, such as Wi-Fi, 2G or 3G, 4G LTE, 5G NR, or a combination thereof. In an exemplary embodiment, the communication component 1616 receives a broadcast signal or broadcast associated information from an external broadcast management system via a broadcast channel. In an exemplary embodiment, the communication component 1616 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the device 1600 may be implemented with one or more ASICs, DSPs, Digital Signal Processing Devices (DSPDs), PLDs, FPGAs, controllers, micro-controllers, microprocessors or other electronic components, for implementing the registration method performed by the terminal as described in any one of the above embodiments.

In some exemplary embodiments, there is also provided a non-transitory computer readable storage medium including instructions, such as the memory 1604, executable by the processor 1620 in the device 1600, for performing the above methods. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

It should be noted that in the disclosure, relational terms such as first and second and so on are only used to distinguish one entity or operation from another entity or operation, without necessarily requiring or implying any actual relationship or sequence between these entities or operations. The terms "comprise", "contain" or any other variation thereof are intended to cover a non-exclusive inclusion such that a process, a method, a substance or an apparatus including a list of elements includes not only those elements but also others elements not expressly listed, or elements inherent to such process, method, substance or apparatus. Without further more limitation, an element defined by the statement "comprises a..." does not exclude the presence of additional identical elements in the process, the method, the substance, or the apparatus including said elements.

The methods and devices provided by embodiments of the present disclosure have been introduced in detail above. Specific examples are used in this disclosure to illustrate
the principles and implementations of the present disclosure. The description of the above embodiments is only used to help understand the methods of the present disclosure and the core idea thereof. At the same time, for those ordinary skilled in the art, there will be changes in the specific implementation and application scope based on the idea of the disclosure. In summary,
the content of this description should not be understood as a limitation to the disclosure.

## Claims

1. A registration method, performed by a terminal, comprising:
sending a first identifier of the terminal, a registration type and an identifier of a non-public network to be registered to a trusted non-3rd generation partnership project access network (TNAN).

2. The method according to claim 1, wherein the registration type comprises at least one of:
stand-alone non-public network onboarding;
initial registration; or
mobility registration update.

3. The method according to claim 2, wherein the first identifier comprises at least one of:
subscription permanent identifier (SUPI);
subscription concealed identifier (SUCI);
onboarding SUPI; or
onboarding SUCI.

4. The method according to claim 3, wherein, in a case that the registration type is the stand-alone non-public network onboarding, the first identifier comprises the onboarding SUPI and/or the onboarding SUCI.

5. The method according to claim 1, wherein, when an identifier of a network to be registered is an identifier of a non-public network, and an authentication algorithm of the terminal supports SUPI privacy protection mechanism, the first identifier comprises an anonymous identifier.

6. The method according to claim 5, further comprising:
sending a second identifier of the terminal to the TNAN, wherein the second identifier is an identifier of an authenticated terminal or an identifier having a mapping relationship with the identifier of the authenticated terminal.

7. A registration method, performed by a trusted non-3rd generation partnership project access network (TNAN), comprising:
receiving a first identifier of a terminal, a registration type and an identifier of a non-public network to be registered sent by the terminal; and
sending a registration request to an access and mobility management function (AMF), wherein the registration request comprises the first identifier, the registration type, and the identifier of the non-public network to be registered.

8. The method according to claim 7, wherein the registration type comprises at least one of:
stand-alone non-public network onboarding;
initial registration; or
mobility registration update.

9. The method according to claim 8, wherein the first identifier comprises at least one of:
subscription permanent identifier (SUPI);
subscription concealed identifier (SUCI);
onboarding SUPI; or
onboarding SUCI.

10. The method according to claim 9, wherein, in a case that the registration type is the stand-alone non-public network onboarding, the first identifier comprises the onboarding SUPI and/or the onboarding SUCI.

11. The method according to claim 8, wherein, when an identifier of a network to be registered is an identifier of a non-public network, and an authentication algorithm of the terminal supports SUPI privacy protection mechanism, the first identifier comprises an anonymous identifier.

12. The method according to claim 11, further comprising:
receiving a second identifier of the terminal sent by the terminal, wherein the second identifier is an identifier of an authenticated terminal or an identifier having a mapping relationship with the identifier of the authenticated terminal.

13. The method according to claim 12, further comprising:
determining a key corresponding to the second identifier sent by the terminal according to a mapping relationship between a second identifier and a key sent by the AMF;
authenticating an identity of the terminal based on the key determined.

14. The method according to claim 12, further comprising:
in a case that the mapping relationship between the second identifier and the key sent by the AMF is not received, or the key corresponding to the second identifier sent by the terminal is not determined according to the mapping relationship, sending the second identifier sent by the terminal to the AMF;
receiving from the AMF the key corresponding to the second identifier sent by the terminal;
authenticating an identity of the terminal based on the key received from the AMF.

15. A registration method, performed by an access and mobility management function (AMF), comprising:
receiving a registration request sent by a trusted non-3rd generation partnership project access network (TNAN), wherein the registration request comprises a first identifier of a terminal, a registration type, and an identifier of a non-public network to which the terminal is to be registered.

16. The method according to claim 15, wherein the registration type comprises at least one of:
stand-alone non-public network onboarding;
initial registration; or
mobility registration update.

17. The method according to claim 16, wherein the first identifier comprises at least one of:
subscription permanent identifier (SUPI);
subscription concealed identifier (SUCI);
onboarding SUPI; or
onboarding SUCI.

18. The method according to claim 17, further comprising: in a case that the registration type is the stand-alone non-public network onboarding, determining that the terminal is to be registered for onboarding.

19. The method according to claim 17, wherein, in a case that the registration type is the stand-alone non-public network onboarding, the first identifier comprises the onboarding SUPI and/or the onboarding SUCI.

20. The method according to claim 16, wherein, when an identifier of a network to be registered is an identifier of a non-public network, and an authentication algorithm of the terminal supports SUPI privacy protection mechanism, the first identifier comprises an anonymous identifier.

21. The method according to claim 20, further comprising:
sending a second identifier, a key corresponding to the second identifier generated by the AMF for the TNAN, and a mapping relationship between a second identifier and a key to the TNAN, wherein the second identifier is an identifier of an authenticated terminal or an identifier having a mapping relationship with the identifier of the authenticated terminal.

22. The method according to claim 21, further comprising:
receiving a second identifier sent by an authentication service function (AUSF);
generating a key corresponding to the second identifier according to relevant parameters of the second identifier;
determining a mapping relationship between the key corresponding to the second identifier and the second identifier.

23. The method according to claim 20, further comprising:
receiving a second identifier sent by the TNAN, wherein the second identifier is an identifier of an authenticated terminal or an identifier having a mapping relationship with the identifier of the authenticated terminal;
sending the second identifier to an AUSF;
receiving an authenticated SUPI corresponding to the second identifier from the AUSF;
positioning a locally generated key according to the authenticated SUPI; and
sending the key to the TNAN.

24. The method according to any one of claims 15 to 23, further comprising:
in a case that the registration type is a stand-alone non-public network onboarding, applying locally configured AMF configuration data for onboarding to restrict terminal network usage to only onboarding;
storing in terminal context indication information indicating that the terminal is registered for onboarding.

25. A communication system, comprising a terminal, a trusted non-3rd generation partnership project access network (TNAN) and an access and mobility management function (AMF), wherein the terminal is configured to perform the registration method according to any one of claims 1 to 6, the TNAN is configured to perform the registration method according to any one of claims 7 to 14, and the AMF is configured to perform the registration method according to any one of claims 15 to 24.

26. A registration apparatus, comprising:
a sending module, configured to send a first identifier of a terminal, a registration type and an identifier of a non-public network to be registered to a trusted non-3rd generation partnership project access network (TNAN).

27. A registration apparatus, comprising:
a receiving module, configured to receive a first identifier of a terminal, a registration type and an identifier of a non-public network to be registered sent by the terminal; and
a sending module, configured to send aa registration request to an access and mobility management function (AMF), wherein the registration request comprises the first identifier, the registration type, and the identifier of the non-public network to be registered.

28. A registration apparatus, comprising:
a receiving module, configured to receive a registration request sent by a trusted non-3rd generation partnership project access network (TNAN), wherein the registration request comprises a first identifier of a terminal, a registration type, and an identifier of a non-public network to which the terminal is to be registered.

29. A communication device, comprising:
a processor;
a memory for storing a computer program;
wherein, when the computer program is executed by the processor, the registration method according to any one of claims 1 to 6 is implemented.

30. A communication device, comprising:
a processor;
a memory for storing a computer program;
wherein, when the computer program is executed by the processor, the registration method according to any one of claims 7 to 14 is implemented.

31. A communication device, comprising:
a processor;
a memory for storing a computer program;
wherein, when the computer program is executed by the processor, the registration method according to any one of claims 15 to 24 is implemented.

32. A computer-readable storage medium for storing a computer program, wherein, when the computer program is executed by a processor, the registration method according to any one of claims 1 to 6 is implemented.

33. A computer-readable storage medium for storing a computer program, wherein, when the computer program is executed by a processor, the registration method according to any one of claims 7 to 14 is implemented.

34. A computer-readable storage medium for storing a computer program, wherein, when the computer program is executed by a processor, the registration method according to any one of claims 15 to 24 is implemented.
